# EUROPEAN PATENT APPLICATION

(11) **EP 2 957 392 A1**
(43) Date of publication of application: **23.12.2015**
(21) Application number: 14172929.3
(22) Date of filing: 18.06.2014
(51) Int. Cl.: B25J 9/00

(54) **Movement apparatus**

(71) Applicant: Moog B.V., 2150 AD Nieuw-Vennep (NL)
(72) Inventor: LAMMERTSE, Pieter, 1181SW Amstelveen (NL)
(74) Representative: Jones, John Bryn

(57) **Abstract**

A movement apparatus (10) for a limb e.g. a human shoulder (S) has a series of push rods (76, 88) and a torque rod (100) extending from a base (11) to a human-machine interface (22) to apply torques thereto without the need for mechanical joints proximate the biological joint.

## Description

The present invention is concerned with a movement apparatus. More specifically, the present invention is concerned with a movement apparatus for a human limb, which can control, drive, assist or receive as an input, human motion.

Movement apparatuses which attach to the human or animal body and provide control, driving forces, assisting forces and / or received movement as an input (to e.g. drive a virtual or slave device) are generally referred to as exoskeletons. The term exoskeleton has a broad meaning in this context, and includes movement apparatuses which provide a human / machine interface for the transferral of force therebetween regardless of whether the movement apparatus is carried by the subject, or mounted to an external structure.

In the medical sector exoskeletons can assist with rehabilitation by supporting and assisting subject movement. The degree of support can be varied to provide an ever decreasing amount of assistance as the subject's ability to control their limbs improves. Exoskeletons may also act as assistive devices for daily activities in those with permanent injury or illness. In this instance human motion is more of a control input, with the majority of the force provided by actuators driving the exoskeleton.

Exoskeletons can also act as input devices. For example exoskeletons can of remote devices (such as robot arms), acting as a "master" controller to the robot arm "slave". As well as control input, exoskeletons can also provide feedback to the user based on the external forces experienced by the slave device. Exoskeletons can also provide a virtual simulation environment providing simulated external forces on the user based on the virtual environment.

Mechanical exoskeletons are well known in the art. Known exoskeletons are provided in the form of serial robot architectures that comprise a plurality of members in a series, or chain, each member connected to the next by a joint with at least one degree of freedom. For example, a first member would be connected to the subject's upper arm, a second member to the lower arm, and a rotational joint positioned therebetween having an axis passing through the axis of rotation of the elbow. The joint may therefore be driven by e.g. a motor mounted at the axis to assist flexion and extension of the arm. A similar arrangement may be provided for the shoulder, but having more joints due to the many degrees of freedom of that biological joint.

Exoskeletons which support and guide the human shoulder joint need to articulate in a number of axes. The human shoulder joint (the glunohumeral joint) is rotatable in three axes to facilitate arm:
- rotation (about a vertical axis);
- abduction / adduction (about a fore-aft horizontal axis raising and lowering the arm to the side); and,
- flexion (about a side-to-side horizontal axis raising and lowering the arm to the front and rear).

The joint also has scapular degrees of freedom which allow the centre of joint rotation to move vertically (scapular elevation and depression) and horizontally in a fore-aft direction (scapular adduction and abduction). As such, the centre of rotation of the shoulder moves during articulation. These movements are shown in Figures 1 and 2 of prior art document WO 2012/175211.

Various types of exoskeleton have been proposed in the prior art. The most common type is a serial robot having a static base (attached to the subject's back or an external structure), the first joint of which is the shoulder rotation axis. A limb support is positioned on the other side of the joint to the static base and attached to the arm. For example, a first member may extend from the back to above the subject's shoulder where a first rotational joint is positioned, having an axis directed vertically downwardly into the subject's shoulder for rotation of the limb support. A motor is position at the joint, and can articulate it. The result is that a moment of force is applied to the point at which the limb support is attached to the arm, thus articulating the joint and shoulder simultaneously. The Armeo (TM) Power system from Hocoma (TM) is such a system.

Some exoskeletons take an alternative approach, and provide the first axis as the abduction axis (i.e. a fore-aft axis). In such all cases, the joint axis is in a plane parallel to the sagittal plane of the subject- i.e. in a fore-aft plane. The ABLE (TM) system from CEA-LIST (TM) and ISIR (Institut des Systemes Intelligents et de Robotique) (TM) is such a system. Other than the orientation of the first joint, all of these prior art shoulder exoskeletons apply a moment of force to the arm about some axis defined by a mechanical joint having an axis in common with the biological joint in question.

WO2008/131563 shows a known exoskeleton. In Figure 15a, the serial mechanism is shown and in particular the three glenohumeral rotaton joint axes. The first axis (axis 1) is for shoulder rotation and as such is substantially vertical in use.

US2007/0225620 shows an exoskeleton in which a first joint is provided directed at the centre of the subject's back. This allows for raising and lowering of the shoulder centre of rotation in use. The first joint directed at the shoulder is vertical (for shoulder rotation).

All of the above-mentioned prior art exoskeletons share a common problem- for reasons that will be explained below, the mechanical joint axes of the exoskeleton must be correctly and accurately aligned with the biological joint axes of the subject. As mentioned, this is difficult for the shoulder because in practice the shoulder joint moves linearly relative to the body (scapular articulation). Where an exoskeleton is to be applied to more than one joint (e.g. shoulder and an elbow) this becomes even more difficult.

In prior art solutions the following approaches have been made to maintain successful alignment:
- careful alignment procedures when fitting the exoskeleton to the subject- this increases set-up time and does not take account of movement / articulation from the fitted position in use;
- adding adjustable (e.g. sliding) links to better fit the subject- this increases set up time and complexity of the exoskeleton;
- adding extra passive degrees of freedom to the basic mechanism for link length adjustment- this increases complexity and cost;
- adding extra pivots and sliders at the local interfaces between the exoskeleton and the human limbs- this increases complexity and cost; and,
- adding extra active degrees of freedom to the basic mechanism e.g. for following shoulder scapular motion- this increases complexity and cost.

As such, all of the known approaches have inherent drawbacks.

The reason that alignment is so important is that subject discomfort is caused by misalignment between the exoskeleton mechanical joints and the subject's biological joints. The effect of these misalignments is to create undesirable linear forces at the biological joint. For example, in the human shoulder, scapular articulation will move the centre of rotation of the shoulder joint. This movement has to be accounted for (by moving the mechanical joint in use, which is difficult to do accurately), or by restricting scapular motion, which is uncomfortable and does not allow a true biological motion of the subject, thus defeating the object of the apparatus. This is counterproductive in all fields of exoskeleton use, and can cause damage to the human body.

A further problem with known systems is the potential for gimbal lock. Known exoskeletons comprise a plurality of mechanical joints whose axes intersect at a biological joint. For example, as described above, the shoulder has three rotational degrees of freedom. Known exoskeletons are provided with three mechanical joints in series intersecting the shoulder to support a full range of motion. Often, the first joint (from the static base) is the vertical axis supporting internal / external rotation of the shoulder. When the arm is hanging down, this is aligned with the forearm rotation axis, causing a gimbal lock which can reduce the range of movement of the subject's arm.

It is an aim of the present invention to overcome, or at least mitigate, the above described problems with exoskeletons.

According to a first aspect of the present invention there is provided a movement apparatus for a human limb, comprising:
a base;
a human-apparatus interface configured to be attached to the limb;
a first force transfer subassembly connected between the base and the human-apparatus interface ;
characterised by:
   a second force transfer subassembly connected between the base and the human-apparatus interface , forming a separate load path to the first subassembly;
wherein the first and second force transfer subassemblies are independently moveable to transfer a force couple and thereby a torque between the base and the human-apparatus interface.

By "force transfer subassembly" we mean a structure configured to establish a load path (with linear or rotational forces) between the human-apparatus interface and the base. The provision of a second force in parallel with the first (by which we means having a separate, independently controllable movement, as opposed to a serial system) avoids the need for mechanical joints at the subject, thereby alleviating the aforementioned problems associated with mechanical-biological joint misalignment.

Preferably the human-apparatus interface is configured to be freely movable relative to the base in at least one linear degree of freedom. This allows a pure torque to be provided by the apparatus, thus alleviating any discomfort caused by linear forces in use. In this way, the apparatus only provides torques, much like the human body with its muscle pairs.

Preferably the first transfer subassembly comprises a first push rod extending from the base to the human-apparatus interface. More preferably the second transfer subassembly comprises a second push rod extending from the base to the human-apparatus interface, which second pushrod is attached to the human-apparatus interface at a point offset from the first pushrod such that independent actuation of the first and second pushrods transfers a torque between the base and the human-apparatus interface. In the human body, joints are articulated using muscle pairs. Equal muscle force holds the joint in position, and unequal force will act to articulate the joint. For example forearm flexion and extension (about the elbow) is achieved by differential contraction of the biceps and triceps muscle groups. In other words, a torque is applied to the biological joint via two offset muscle groups to effect movement. The present invention simulates this by applying only torques to the limb. The application of a pure torque (without a resultant linear force) to the human-apparatus interface results in rotation about the biological joint (rather than a mechanical joint) for articulation, thus eliminating the potential for misalignment. Not only can a pushrod pair exert a torque via a couple (i.e. a push-pull combination), but also a simultaneous push or pull to rotate the biological joint about a different axis. The pushrods are offset from the biological joint in use for this reason (i.e. they always exert a torque on the joint).

Preferably the first and second force transfer subassemblies comprise an actuator for applying a push / pull force to the first and second pushrods. This allows subject movement to be assisted or controlled. Alternatively transducers can be used in place of actuators to record subject movement as an input.

Preferably the actuators have a rotational output, and the push-pull force is exerted via cranks extending from the rotational outputs. This allows for a simpler system using more reliable rotational motors.

Preferably the cranks are connected to links configured to drive the first and second pushrods via bell cranks. This allows the motors to be remote from the pushrods- e.g. at the base of the inverted pendulum (as will be described below).

Preferably a control system is provided for controlling the actuators, the control system configured to receive an input from a subject input human-apparatus, and to control the actuators to provide an assistive force in response to the input. This allows rehabilitation of the subject to take place in a controlled manner using assistive forces.

Preferably a force sensor is provided in the load path of each force transfer subassembly, and the control system utilises data from the force sensors to control the actuators using admittance control. This allows the mass of the apparatus to become "invisible" or "transparent" to the user such that the system feels more realistic than other types of control (e.g. impedance control in which the subject must overcome the inertia of the apparatus to provide a displacement input).

Preferably the first and second push rods are each connected at either end by joints having three rotational degrees of freedom so as to allow linear motion of the human-apparatus interface in degrees of freedom perpendicular to the push / pull direction of the pushrods. More preferably the first and second pushrods are substantially parallel in at least one position of the human-apparatus interface so as to form a four bar linkage to allow linear motion of the human-apparatus interface in degrees of freedom perpendicular to the push / pull direction of the pushrods. The ability of the human-apparatus interface to move linearly is advantageous, as it permits joint movement in use (e.g. the previously described scapular motion).

Preferably the base comprises a carrier movably mounted to a base subassembly, and in which at least part of the first and second force transfer subassemblies are mounted to the carrier to permit movement thereof. This permits a further degree of freedom of linear movement. Preferably the carrier is rotatably mounted in the base subassembly for rotation about a carrier rotation axis, and more preferably the carrier rotation axis is vertically offset from the push / pull direction of the first and second pushrods in use. This allows linear motion in the direction of the pushrods (which added to the side-to-side and up-and-down motion provided by their aforementioned features, provides linear motion in all three degrees of freedom).

Preferably the carrier carries a larger mass below the carrier rotation axis than above the carrier rotation axis to provide a restorative force to urge the carrier to bottom dead centre. This "pendulum" carrier may carry e.g. the actuators for the force transfer assemblies below the axis (using the link system described above).

Alternatively (or in addition), means may be arranged to exert a force on the carrier to move the carrier. The means arranged to exert a force on the carrier may comprise resilient means configured to provide a restorative force on the carrier to urge the carrier to bottom dead centre. Alternatively the means arranged to exert a force on the carrier comprises an actuator configured to selectively control motion of the carrier.

As such, if a restorative force is not desirable, and true freedom of motion is required, the means (which may be an actuator) may be configured to eliminate the restorative force of the pendulum mass. Alternatively the means may provide an additional restorative effect to control the range of motion of the pendulum.

Preferably a third force transfer subassembly is connected between the base and the human-apparatus interface , in which the third force transfer subassembly comprises a torque rod extending from the base to a point on the human-apparatus interface. This allows torques to be applied in a third degree of freedom (as well as the two provided by the push rod pair). Use of a torque rod means that all three subassemblies can be mounted to a common position- e.g. the same area of the carrier.

The third force transfer subassembly may comprise an actuator for applying a torque to the torque rod.

According to a second aspect of the present invention there is provided a method of transferring force to and from the limb of a subject comprising the steps of:
providing a base;
providing a human-apparatus interface;
providing a first force transfer subassembly between the base and the human-apparatus interface;
providing a second force transfer subassembly between the base and the human-apparatus interface;
attaching the human-apparatus interface to the limb;
transferring a force couple and thereby a torque between the base and the human-apparatus interface by differential movement of the first and second force transfer subassembly.

Preferably the base is oriented rearwardly and outwardly of the subject. More preferably, the force transfer subassemblies are pushrods oriented in a rearward and outward direction of the subject. Preferably the pushrods are at an angle of 45 degrees to the subject's coronal plane.

An example apparatus in accordance with the present invention will now be described with reference to the following figures.
FIGURE 1 is a perspective view of a first apparatus according to the present invention;
FIGURE 2 is a rear view of the apparatus of Figure 1;
FIGURE 3 is a front view of the apparatus of Figure 1;
FIGURE 4 is a left view of the apparatus of Figure 1;
FIGURE 5 is a right view of the apparatus of Figure 1;
FIGURE 6 is a top view of the apparatus of Figure 1;
FIGURE 7 is a detailed view of a part of the apparatus of Figure 1;
FIGURE 8 is a detailed view of a second part of the apparatus of Figure 1;
FIGURE 9 is a detailed view of a third part of the apparatus of Figure 1;
FIGURE 10 is a detailed view of a fourth part of the apparatus of Figure 1;
FIGURE 11 is a plan view of the apparatus of Figure 1 attached to a subject;
FIGURE 12a - 12d are views of the apparatus of Figure 1 in a first position;
FIGURE 13a - 13d are views of the apparatus of Figure 1 in a second position;
FIGURE 14a - 14d are views of the apparatus of Figure 1 in a third position;
FIGURE 15a - 15d are views of the apparatus of Figure 1 in a fourth position;
FIGURE 16a - 16d are views of the apparatus of Figure 1 in a fifth position;
FIGURE 17a - 17d are views of the apparatus of Figure 1 in a sixth position;
FIGURE 18a - 18d are views of the apparatus of Figure 1 in a seventh position;
FIGURE 19 is a perspective view of a part of a second apparatus according to the present invention; and,
FIGURE 20 is a side view of a third apparatus according to the present invention.

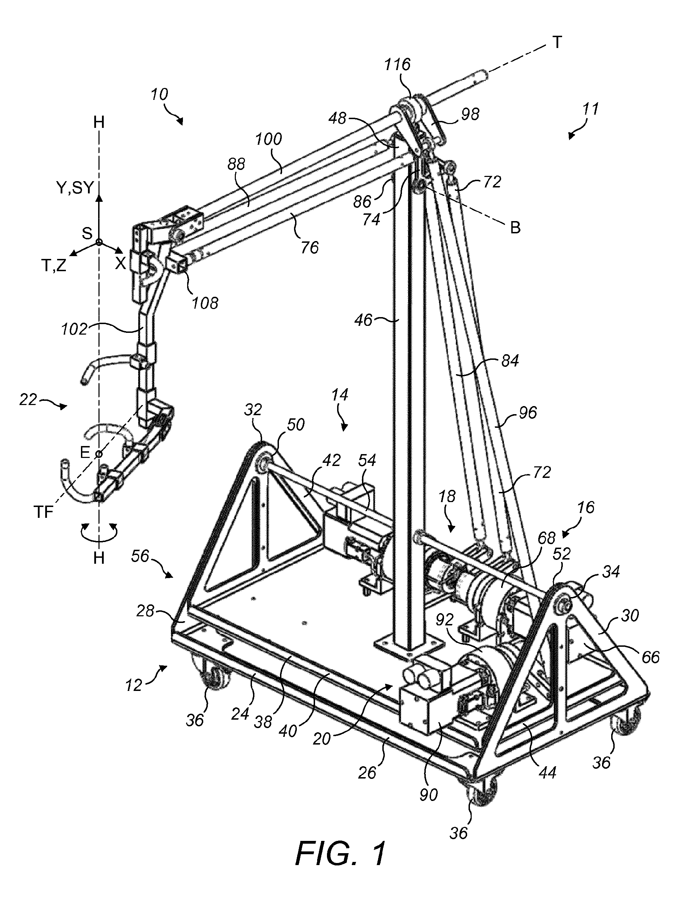

Referring to Figure 1, an apparatus 10 in accordance with the present invention comprises a base 11 having a base subassembly 12 and a carrier in the form of a pendulum subassembly 14. The apparatus also comprises first, second and third force transfer subassemblies 16, 18, 20 and a human interface subassembly 22.

The base subassembly 12 comprises a frame 24 comprising a generally flat, planar base member 26 having two generally triangular flanges extending upwardly normal thereto at either end 28, 30. At the apex of each of the triangular flanges 28, 30 furthest from the base member 26 there is provided a respective rotational joint mounting formation 32, 34. The flat planar base member 26 of the frame 24 is supported on four casters 36, one at each corner. The casters 36 are provided with brakes to secure the apparatus 10 in position.

The pendulum subassembly 14 comprises a frame 38 having a flat, planar base member 40. At either end of the base member 40, there are provided projecting triangular flanges 42, 44 in a similar manner to the frame 24 of the base subassembly 12. Each of the flanges 42, 44 is shorter than the flanges 28, 30 and each has a rotational joint mounting formation 50, 52 at the apex furthest from the flat, planar base 40. At the geometric centre of the flat planar base member 40, an elongate pendulum arm 46 extends normal thereto. The pendulum arm 46 is a square cross-section tube which extends in the same direction as the flanges 42, 44. The arm 46 extends past the ends of both of the flanges 42, 44. The pendulum arm 36 terminates in a free end 48.

A pivot shaft 54 extends parallel to the flat planar base member 40 between the rotational joint mounting formations 50, 52 and extends outwardly thereof. The pivot shaft 54 passes through the longitudinal axis of the pendulum arm 46.

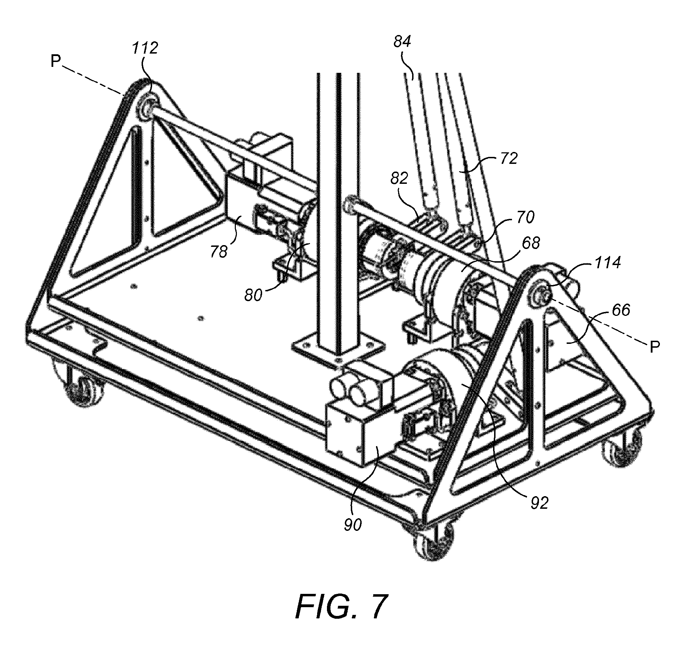

The first force transfer subassembly 16 comprises a motor 66, driving a reduction gearbox 68. The gearbox 68 drives a driving crank 70 as shown in Figure 7 which in turn drives an elongate link 72 along its axis. At the free end of the elongate link 72 there is provided a 90 degree bell crank 74, which in turn drives a first push rod 76 via a ball joint. The first push rod 76 has a ball joint at either end.

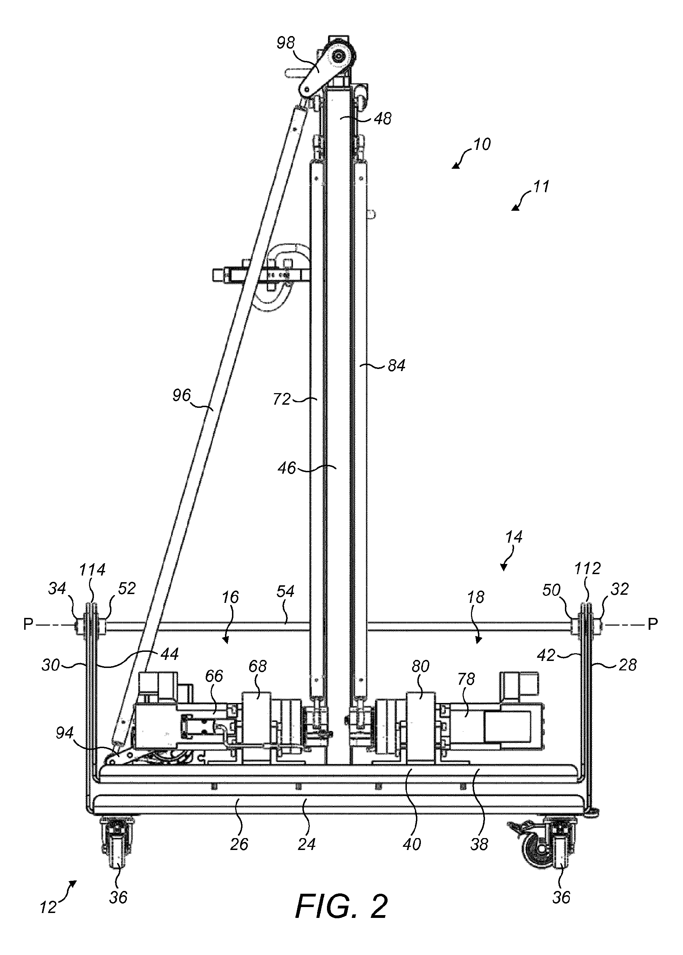

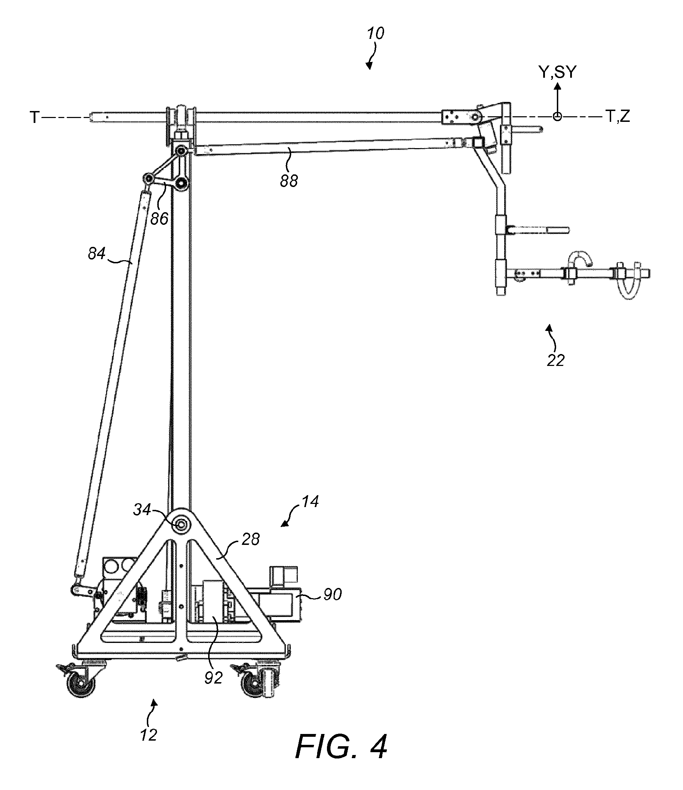

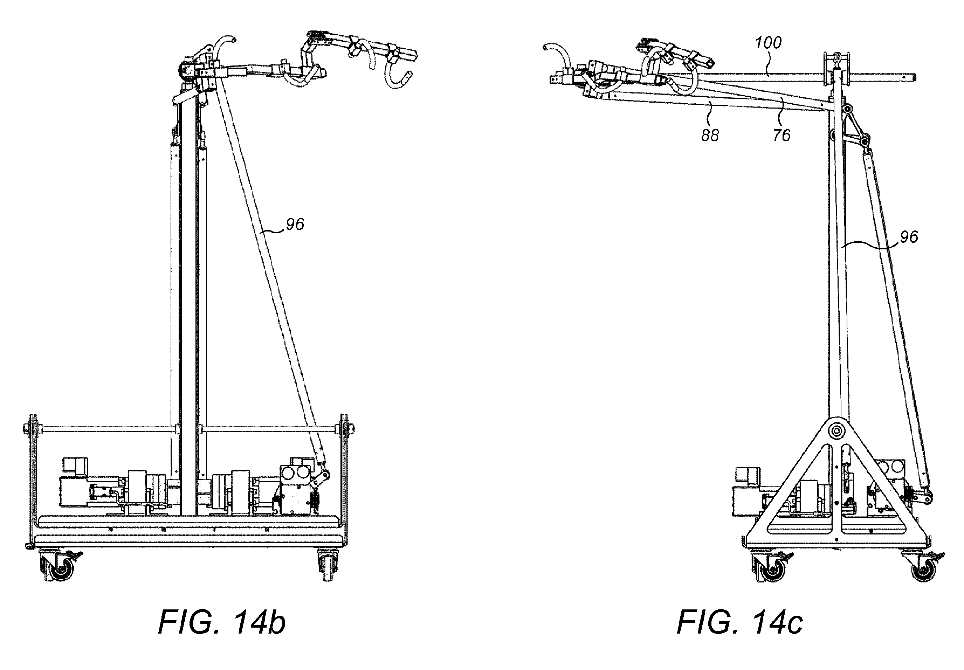

The second force transfer subassembly 18 is similar to the first force transfer subassembly 16 and thus comprises (with reference to Figure 2) a motor 78 driving a reduction gearbox 80 which in turn is connected to drive a driving crank 82, driving a link 84, which in turn with reference to Figure 4, drives a bell crank 86 which drives a second push rod 88 along its axis. The second push rod 88 has a ball joint at either end.

The third force transfer subassembly 20 comprises a motor 90, driving a gearbox 92, which drives a driving crank 94 to drive a link 96 along its axis. The link 96 in turn drives a driven crank 98 which is rigidly connected to a torque rod 100 such that axial movement of the link 96 applies a torque to the torque rod 100.

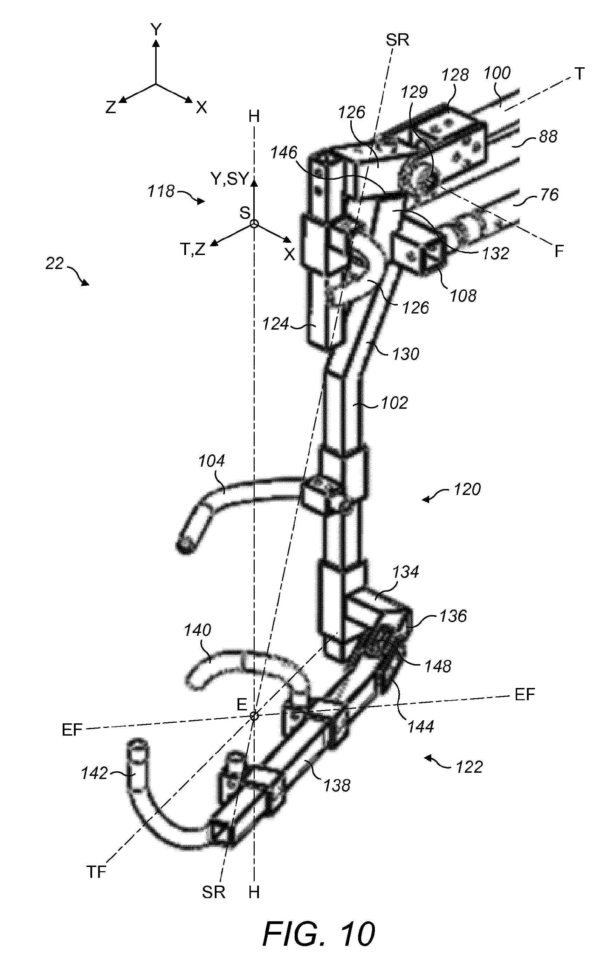

The human interface subassembly 22, turning in particular to Figure 10, comprises a shoulder mount 118, an upper arm mount 120 and a lower arm mount 122.

The shoulder mount 118 comprises a shoulder splint 124 having an arm 126 extending therefrom configured to hold the subject's upper arm (proximate the shoulder joint-the centre of which is depicted as S) against the splint 124 such that the shoulder splint 124 is parallel to the axis of the subject's humerus (depicted as axis H). Extending from an upper end of the shoulder splint 124, and away from the subject's shoulder in use to form an inverted "L" shape, there is provided a joint mounting member 126. The joint mounting member 126 is connected to a free end 128 furthest from the subject's shoulder S in use by a joint 129 having an axis of rotation F perpendicular to the humerus axis H.

The upper arm mount 120 comprises an upper arm splint 102 having a retention arm 104 extending therefrom configured to hold the subject's upper arm against the upper arm splint 102 such that the upper arm splint 102 is generally parallel to the axis of the subject's humerus H. The splint 102 extends from the subject's shoulder S to the subject's elbow (shown as point E). At the shoulder end of the splint 102 there is provided an upper splint extension 130 extending at an angle to the splint 102 way from the humerus H in use. The upper splint extension 130 is provided with two lugs 108, 110 extending opposite to each other perpendicular to the humerus axis H. A joint mounting member 132 extends from the upper splint extension 130. A lower splint extension 134 is also provided proximate the elbow E in use, extending perpendicular to the splint 102 and terminating in a joint mounting formation 136. The upper arm splint 102, upper splint extension 130, lugs 108, 110, joint mounting member 132, lower splint extension 134 and joint mounting formation 136 form a single body.

The lower arm mount 122 comprises a lower arm splint 138 having retention arms 140, 142 extending therefrom configured to hold the subject's lower arm against the lower arm splint 138 such that the lower arm splint 138 is generally parallel to the axis of the subject's tibia and fibula (depicted as axis TF). At an elbow end (E) of the lower arm splint 138 there is provided a joint mounting formation 144.

The human interface subassembly 22 is assembled as follows. The shoulder mount 118 and upper arm mount 120 are assembled via a rotation joint 146 receiving in their respective joint mounting formations 126, 132. The joint 146 has a skewed rotation axis SR which is directed at an angle to the humerus axis H into the elbow joint E. As such the upper arm mount 120 can rotate relative to the shoulder mount 118 about the skewed axis SR. The lower arm mount 122 and the upper arm mount 120 are assembled by means of an elbow flexion joint 148 having an axis EF passing through the elbow joint E, and coincident with the degree of rotational freedom of the elbow E.

It will be noted that no mechanical joints are provided with degrees of freedom intersecting the shoulder.

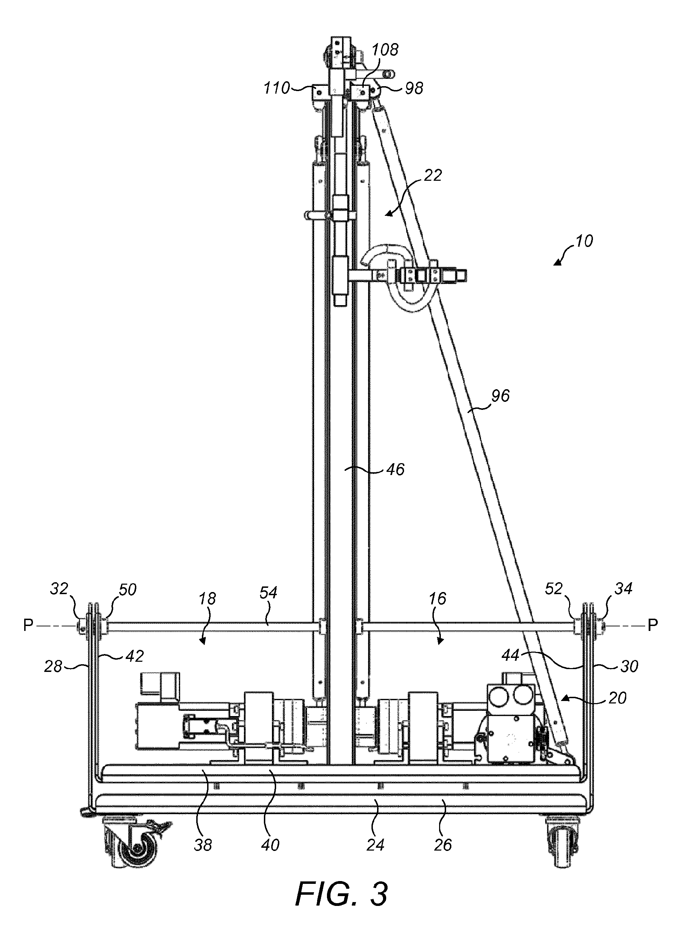

The apparatus 10 is assembled as follows. Rotational joints 112, 114 as shown in Figure 2 are provided to rotatably mount the pendulum subassembly 14 to the base subassembly 12 at the respective apexes of the flanges 28, 30, 42, 44. The joints 112, 114 are held in the joint mounting formations 32, 34, 50, 52. As such, the pendulum subassembly 14 can rotate about a pendulum axis P (see Figures 2 and 3) with respect to the base subassembly 12.

The first force transfer subassembly 16 is mounted to the pendulum subassembly 14 of the base 11 with the motor 66 and motor 68 being attached to the flat planar base member 40. The link 72 extends to the bell crank 74 which is mounted to the free end 48 of the pendulum arm 46 for rotation about a common bell crank axis B (see Figure 1).

The second force transfer subassembly 18 is mounted to the pendulum subassembly 14 with the motor 78 and gearbox 80 being attached to the flat planar base member 40. The link 84 extends to the bell crank 86 which is mounted to the free end 48 of the pendulum arm 46 for rotation about the common bell crank axis B (see Figure 1). The bell crank 86 is mounted on an opposite side of the pendulum arm 46 to the bell crank 74.

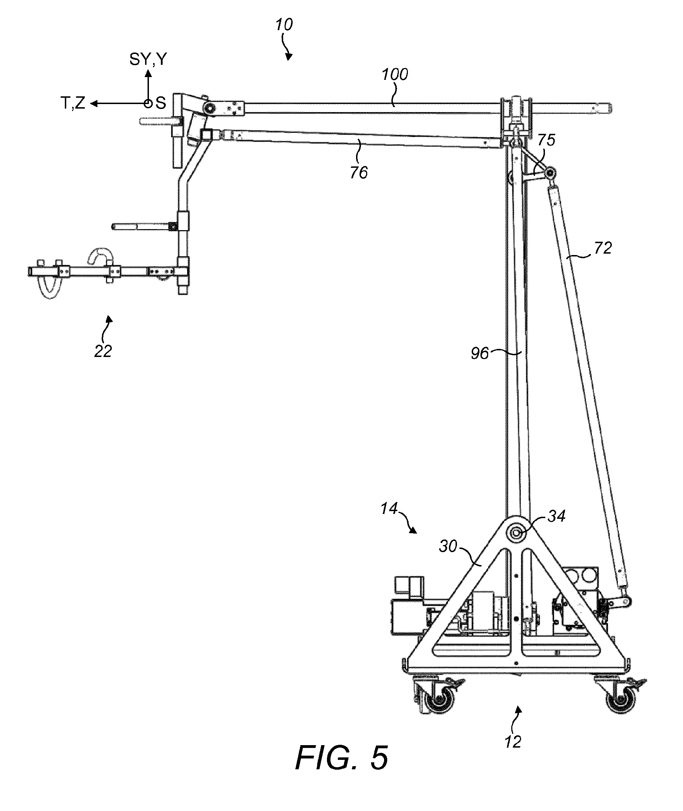

As shown in Figures 4 and 5, the first push rod 76 and the second push rod 88 extend substantially perpendicular to the pendulum arm 46 and parallel to each other. At the free ends of the first and second push rods 76, 78 they are attached to respective lugs 108, 110 of the upper arm mount 120 via their respective ball joints.

The third force transfer subassembly 20 is also mounted to the flat, planar base member 40 of the pendulum subassembly 14 with the link 96 extending towards the free end 48 of the pendulum arm 46. In this instance, a torque rod joint arrangement 116 is provided at the free end 48 of the pendulum arm 46. The torque rod joint arrangement 116 allows movement of the torque rod 100 in the following three rotational degrees of freedom:
- rotation about a vertical axis parallel to the pendulum arm 46;
- rotation about a horizontal axis perpendicular to the torque rod axis T;
- rotation about the torque rod axis T (via a plain bearing receiving the torque rod).

The torque rod 100 is connected to the free end 128 of the shoulder mount 118 and is fixed thereto.

A torque input can be provided by the link 96 driving the torque rod 100 to rotate about the torque rod axis T. The torque rod 100 is fixed to the free end 128 of the shoulder mount 118 such that torque can be transferred between the torque rod 100 and the shoulder mount 118.

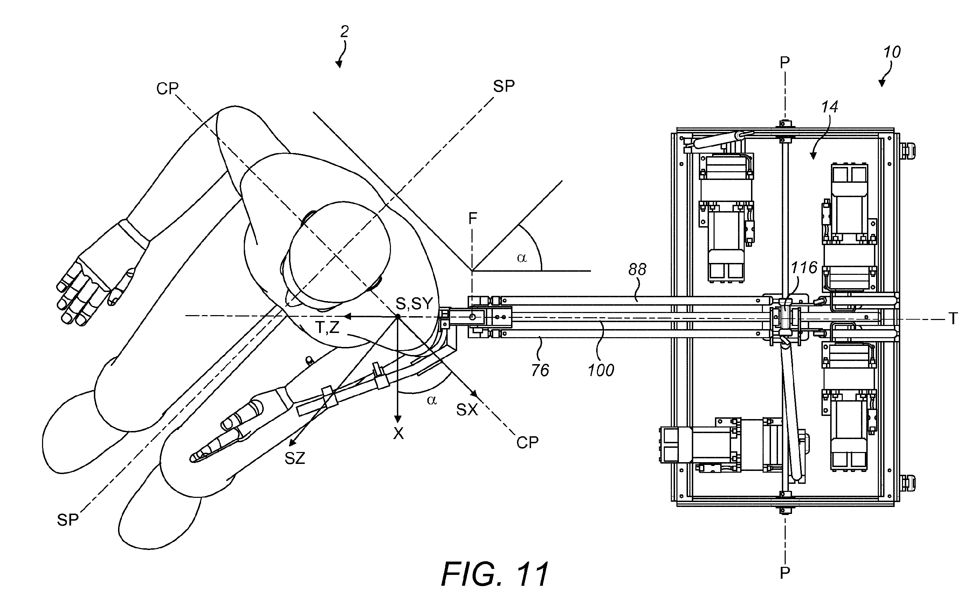

Turning to Figure 11, the apparatus 10 is shown installed on a subject 2. The patient 2 defines a coronal plane CP and a sagittal plane SP. The apparatus 10 is positioned such that the torque rod 100 and the first and second push rods 76, 88 extend from the pendulum subassembly 14 at an angle α of about 45 degrees to the sagittal plane SP (and therefore at an angle of (90 - α) to the coronal plane CP.

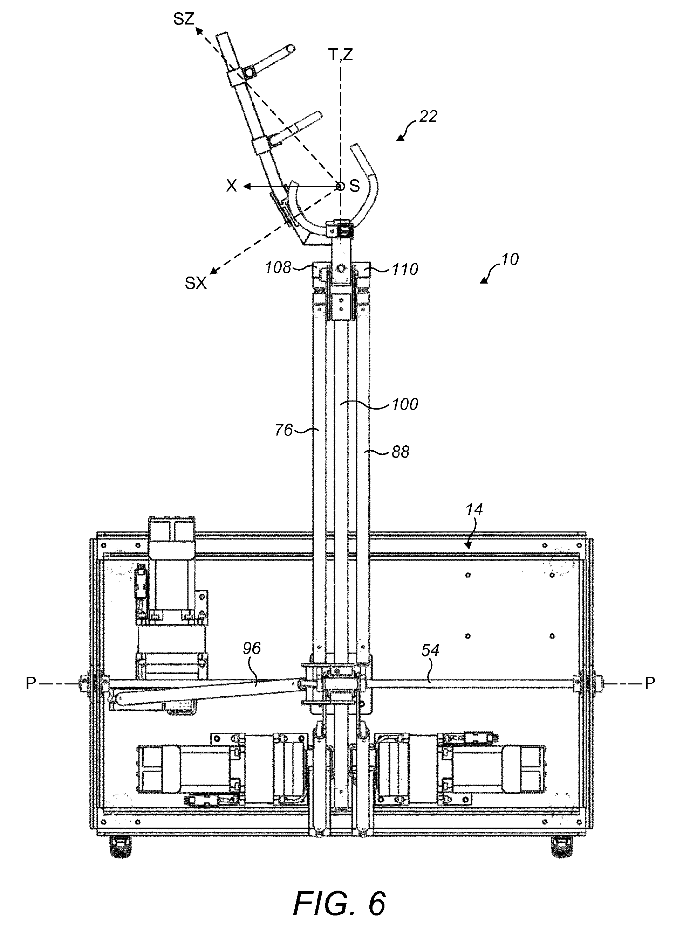

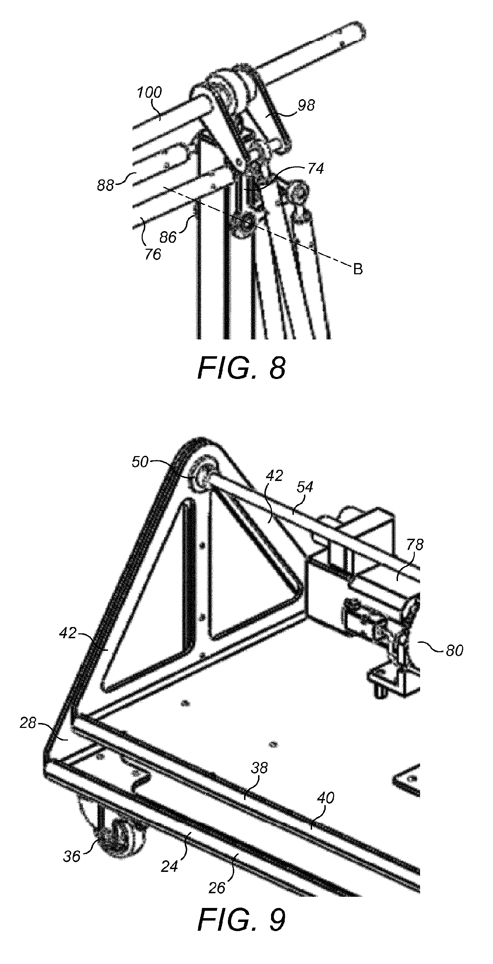

The apparatus 10 defines apparatus axes X, Y, Z as shown in Figures 1, 4, 5, 6, 10 and 11. Apparatus axis Z is parallel to the torque rod axis T (and parallel to the push rods 76, 88 in the position shown in Figures 1 to 11). Apparatus axis Y is vertical, and apparatus axis Z is perpendicular to X and Y (and parallel to the pendulum axis P). The subject 2 defines shoulder axes SX, SY, SZ passing through the shoulder S. Shoulder axis SX is parallel to the coronal plane and horizontal. Shoulder axis SY is vertical, and shoulder axis SZ is horizontal and parallel to the sagittal plane (anteroposterior).

As a result of the aforementioned orientation of the apparatus 10, the shoulder axes SX, SZ are at angle α to the apparatus axes X, Z. The axes SZ, Z are aligned.

With the apparatus 10 mounted to a subject having the arm of the subject mounted within the human interface assembly 22 as shown in Figure 11, free linear motion of the subject 2 is permitted in subject axes SX, SY, SZ. This is enabled by the following motion in the axes X, Y, Z of the apparatus.:
- Linear motion along apparatus axis X is provided by rotation of the torque rod 100 about a vertical axis (parallel to Y) at the joint arrangement 116. This motion is also permitted by the first and second push rods 76, 88 which also rotate about respective vertical axes to form a parallelogram linkage due to their respective ball joints at either end.
- Linear motion along apparatus axis Y (vertical) is provided by rotation of the torque rod 100 about a horizontal axis (parallel to X) at the joint arrangement 116. This "up and down" motion is also permitted by the first and second push rods 76, 88 which are able to rotate in a similar manner by virtue of their respective ball joints at either end.
- Linear motion along axis Z is provided by rotation of the pendulum subassembly 14 about the pendulum axis P (see Figure 3). The tendency of the pendulum subassembly 14 towards bottom dead centre (BDC) provides a small resilient, restorative force in this degree of freedom.

It will be noted that for true linear motion in the directions X and Y, some rotation of the pendulum about pendulum axis P must occur (else the human-apparatus interface will move in an arc).

By combinations of these movements in the apparatus linear degrees of freedom along axes X, Y, Z, the subject's shoulder can move in local shoulder degrees of freedom SX, SY and SZ. These linear degrees of freedom are free for the subject 2 to move.

The ability of the subject's shoulder to move freely in these linear degrees of freedom means that unlike prior art exoskeletons, no net linear force is applied to the shoulder. This allows the subject to move more freely, and without experiencing any uncomfortable linear forces. The shoulder joint is free to move, and only torques (i.e. rotational forces) are applied. The apparatus 10 provides assistive forces in the following rotational degrees of freedom:
- Rotational motion about apparatus axis X is achieved by articulation of the joint 129. This degree of freedom is actuated by motion of the pushrods 76, 88 in the same direction apply a push or pull on the lugs 108, 110. Because the torque rod 100 does not move relative to the top of the pendulum arm 46, the torque rod 100 in combination with the unitary effect of the pushrods 76, 88 (which act in the same sense) creates a push-pull couple on the human-apparatus interface which rotates the shoulder mount 118 and upper arm mount 120 about the flexion joint axis F.
- Rotational motion about apparatus axis Y is achieved by differential motion of the pushrods 76, 88 to apply a push / pull couple on the lugs 108, 110, which rotates the interface 22.
- Rotational motion about apparatus axis Z is achieved when rotation of the shoulder mount 118 occurs about the torque rod axis T. This degree of freedom can be driven by the third force transfer subassembly 20 (i.e. by the motor 90). During this motion, the pushrods 76, 88 are free to rotate to follow the rotation of the torque rod 100.

Because the apparatus 10 supports motion in three rotational degrees of freedom, biological rotations about axis SX (extension / flexion) and SZ (abduction / adduction) can be supported by combined articulations in the apparatus axes X and Z. Interior and exterior rotation about SY is supported by rotation about apparatus axis Y.

The pushrods 76, 88 can be actuated by the motors 66, 78. When the motor 66 of the first force transfer subassembly 14 is driven, the bell crank 74 is rotated and the lug 108 is pushed or pulled. Similarly, when the motor 78 of the second force transfer subassembly 16 is driven, the bell crank 86 is rotated and the lug 110 is pushed or pulled.

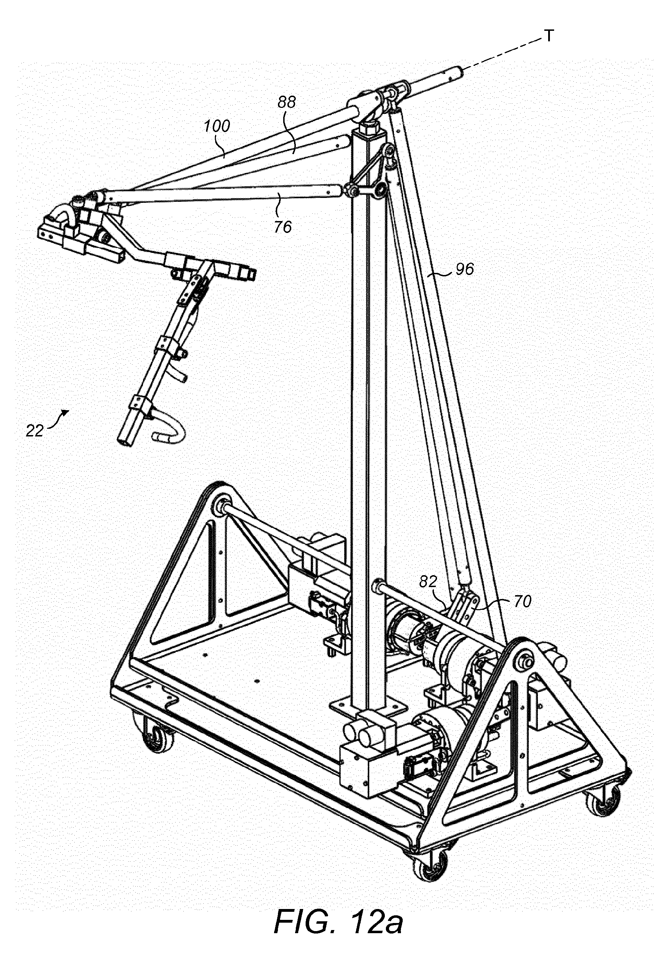

Various motions of the subject are shown in Figures 12a to 18d. The subject 2 is not shown for clarity.

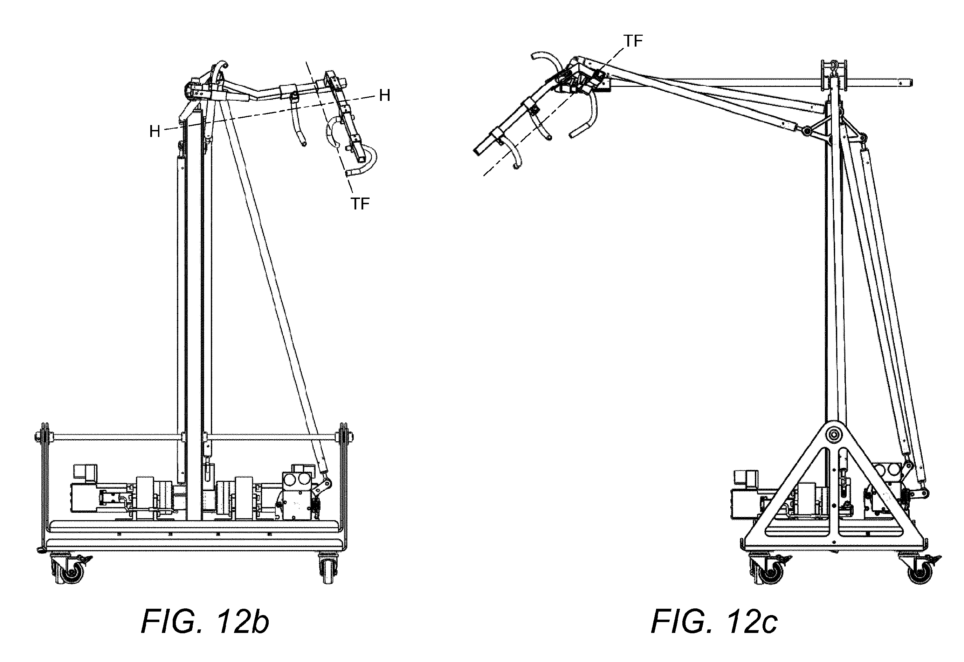

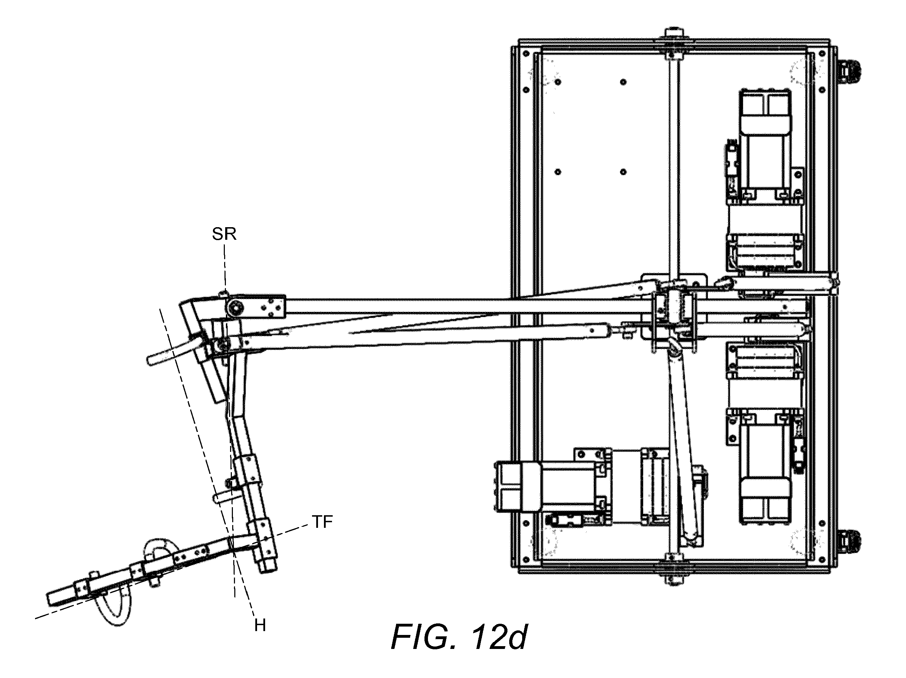

Figures 12a to 12d show the apparatus 10 when the subject's upper arm has moved to a position just below the horizontal, and extending to the side of the subject from the shoulder (see humerus axis H in Figure 12b). This is an abduction of the upper arm about SZ to lift the elbow to the height of the shoulder (compare Figures 11 and 12d). The elbow is bent with the forearm pointing downward (see tibia-fibula axis TF Figure 12c) and as such some internal rotation has taken place. Rotation about SZ is a combination of rotation about apparatus axes Z and X. It can be seen by a comparison of Figures 1 and 12a that the link 96 has moved axially upwardly to rotate the driven crank 98 to rotate the torque rod 100 and thereby rotate the human interface assembly 22 about the torque rod axis T (and apparatus axis Z). Also, the pushrods 76, 88 have moved in opposite directions to provide the requisite motion about apparatus axis X. The resulting composite motion about apparatus axes X and Z is motion about the shoulder axis SZ to effect abduction.

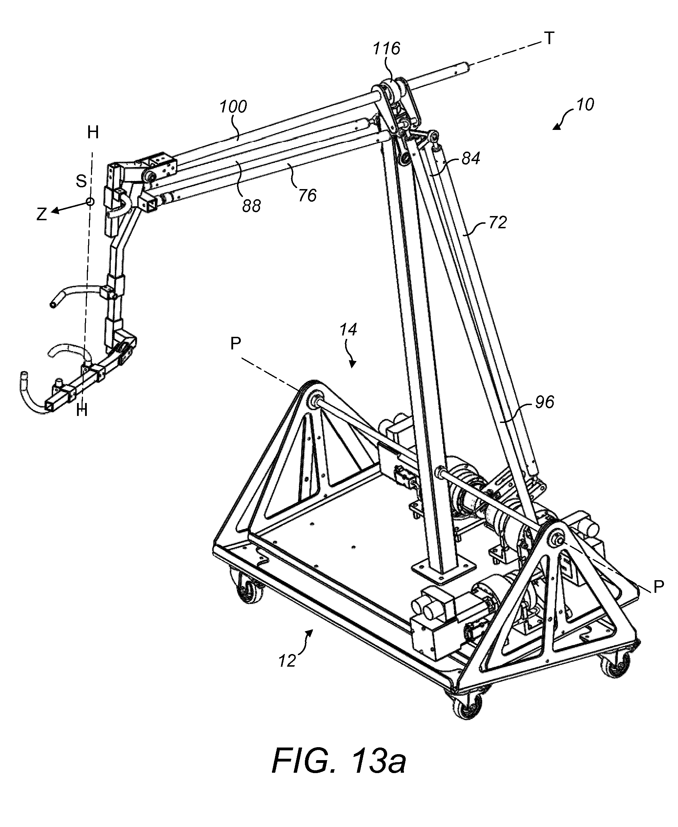

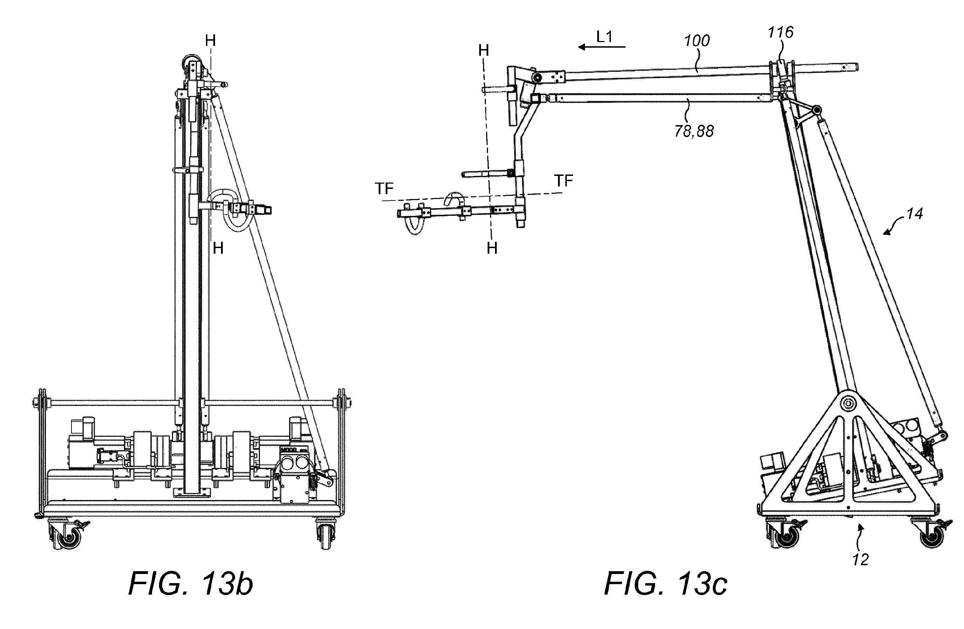

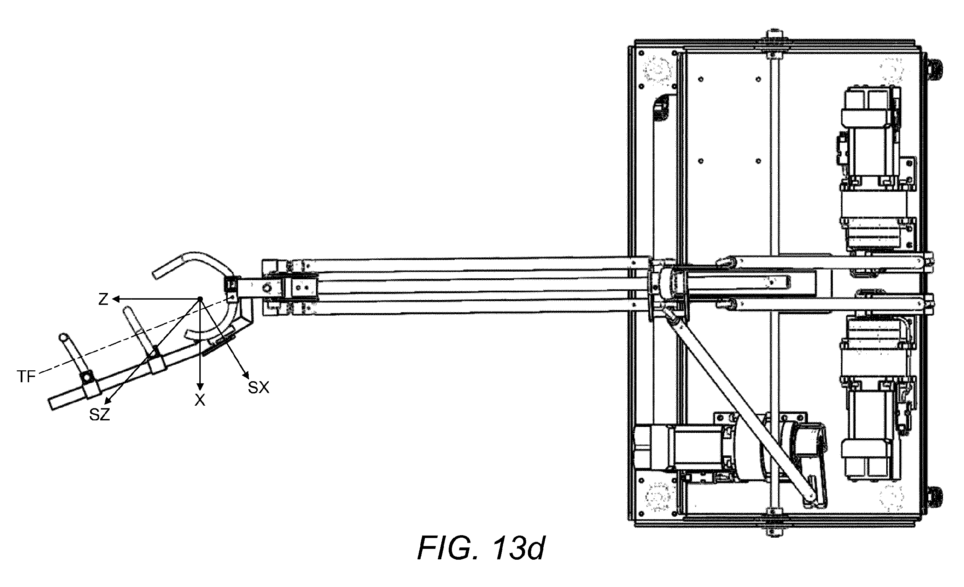

Figures 13a to 13d show how the global position of the shoulder can move along the apparatus axis Z (resulting in a combined shoulder motion along both SZ and -SX) whilst keeping the arm in the same orientation (i.e. the humerus axis H is still vertical). The pendulum subassembly 14 has rotated about the pendulum axis P to move the human interface assembly 22 in direction Z. So that the upper arm remains vertical, the torque rod 100 and the push rods 76, 88 remain parallel. This is achieved by some vertical upward motion of both links 72, 84 to account for the tilting motion of the pendulum subassembly 14, as well as some tilting movement of the torque rod about a horizontal axis due to the universal motion of the joint arrangement 116. In short, the push rod pair 76, 88 and the torque rod 100 form a parallelogram linkage to keep the upper arm vertical.

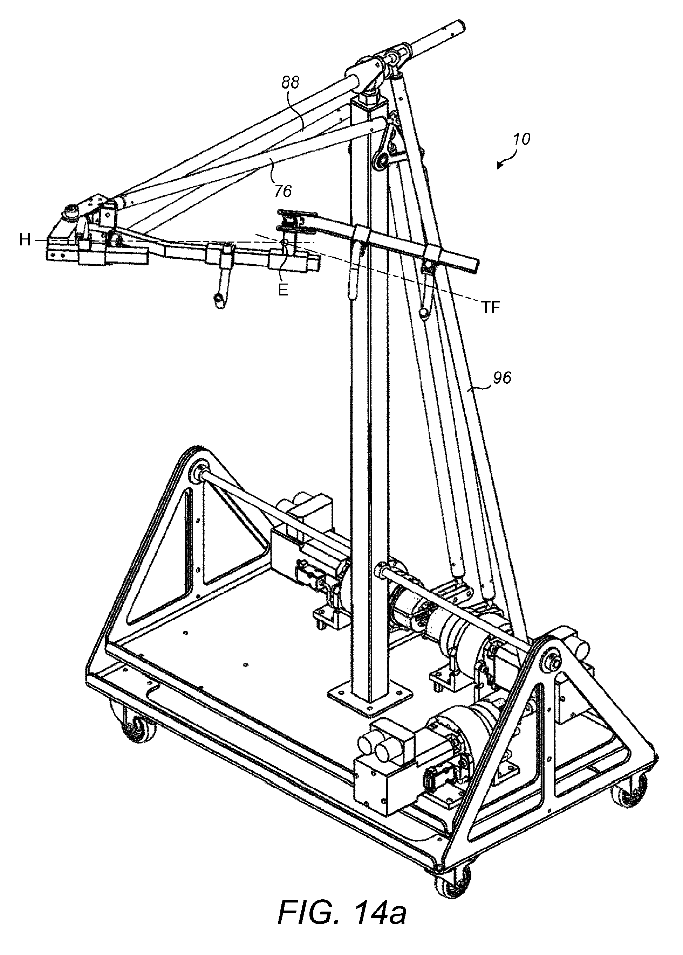

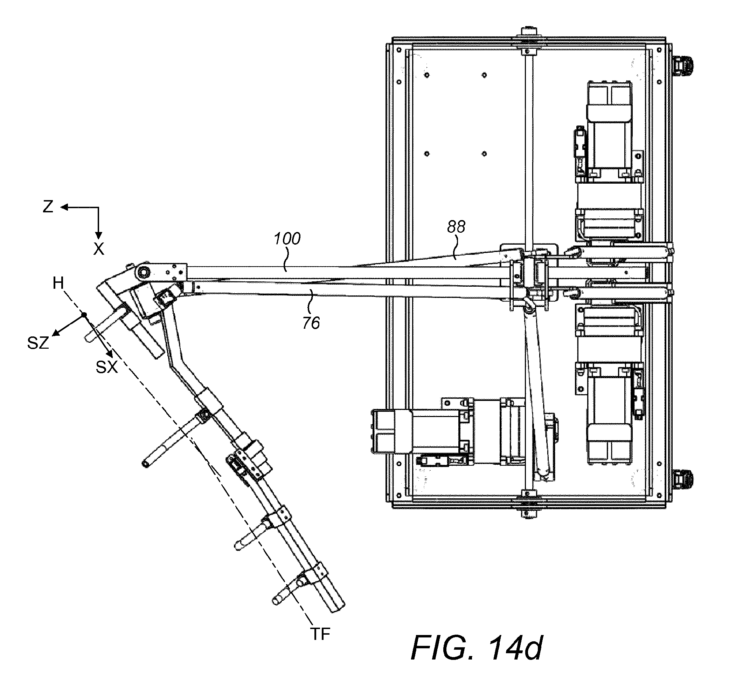

Figures 14a to 14d show the apparatus 10 when the subject's upper arm has moved to a position straight out to the side (in direction SX- both upper arm and forearm are parallel, with the elbow fully extended). Per Figures 12a to 12d, one motion is rotation about apparatus axis Z, and as such it can be seen by a comparison of Figures 1 and 14a that the link 96 has moved axially upwardly to rotate the driven crank 98 to rotate the torque rod 100 and thereby rotate the human interface assembly 22 about the torque rod axis T. The requisite rotation about machine axis X is also provided to result in a combined abduction motion of the arm about SZ. It will be noted that even in this position, the pushrods 76, 88 can still be used to effect internal / external rotation of the arm.

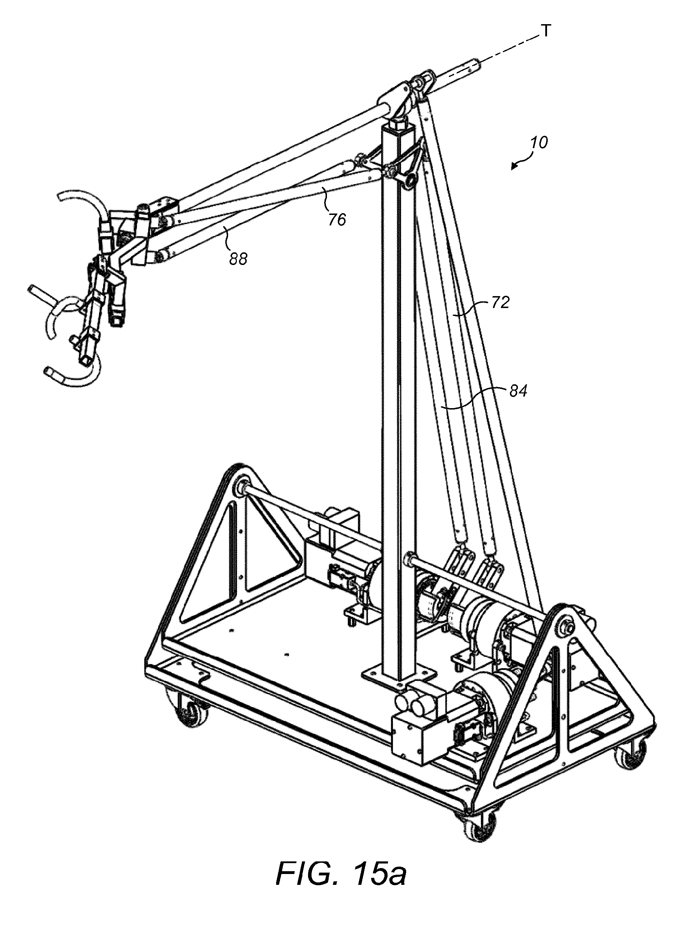

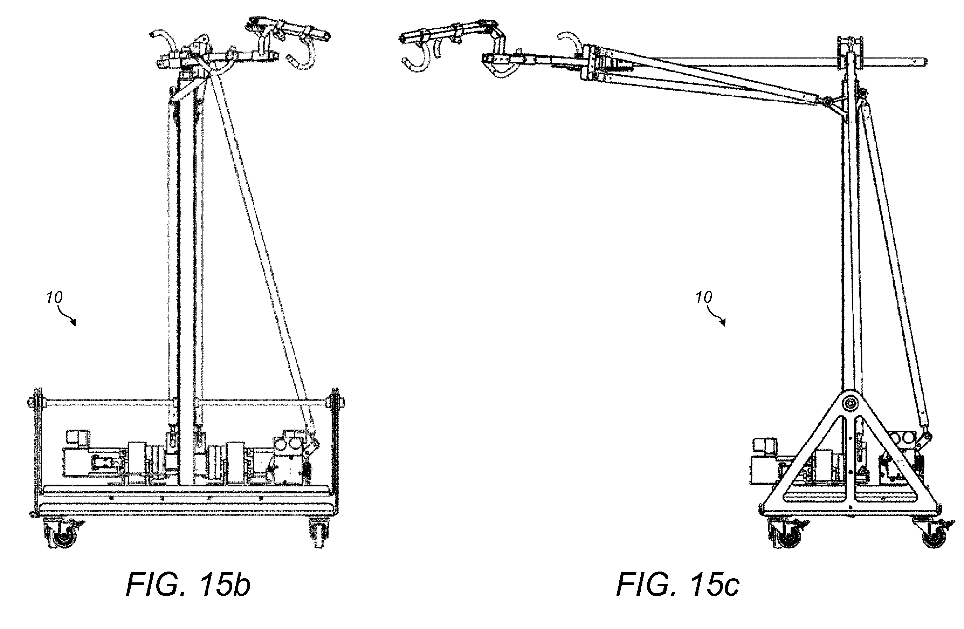

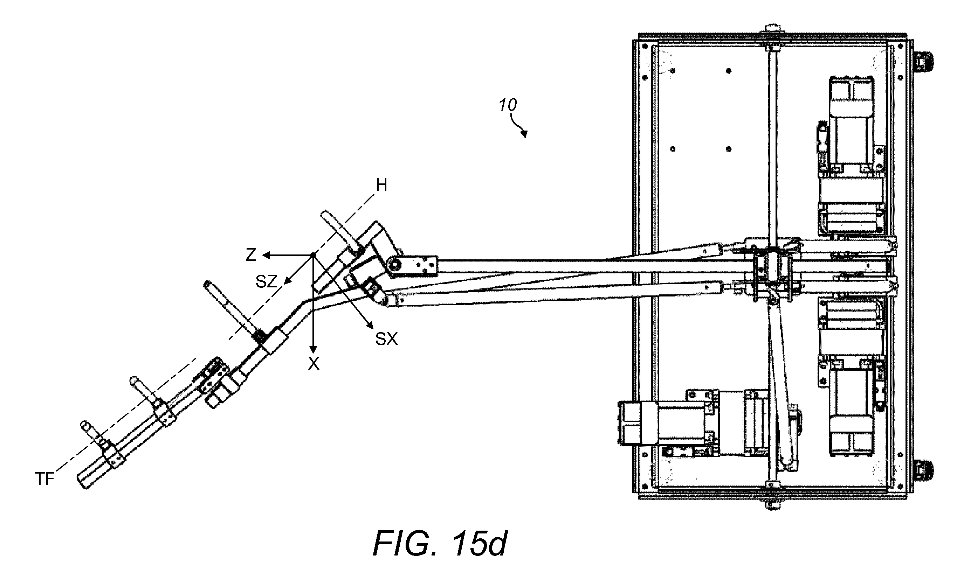

Figures 15a to 15d show the apparatus 10 when the subject's upper arm has moved to a position straight out to the front (arm flexion- both upper arm and forearm are parallel, with the elbow fully extended out to the front of the subject 2). Again, this is permitted by combined motion of the apparatus. Both links 72, 84 push upwardly, which in turn push the first and second pushrods 76, 88 towards the shoulder. The torque rod 100 has also rotated about the axis T to provide some rotation in axis Z.

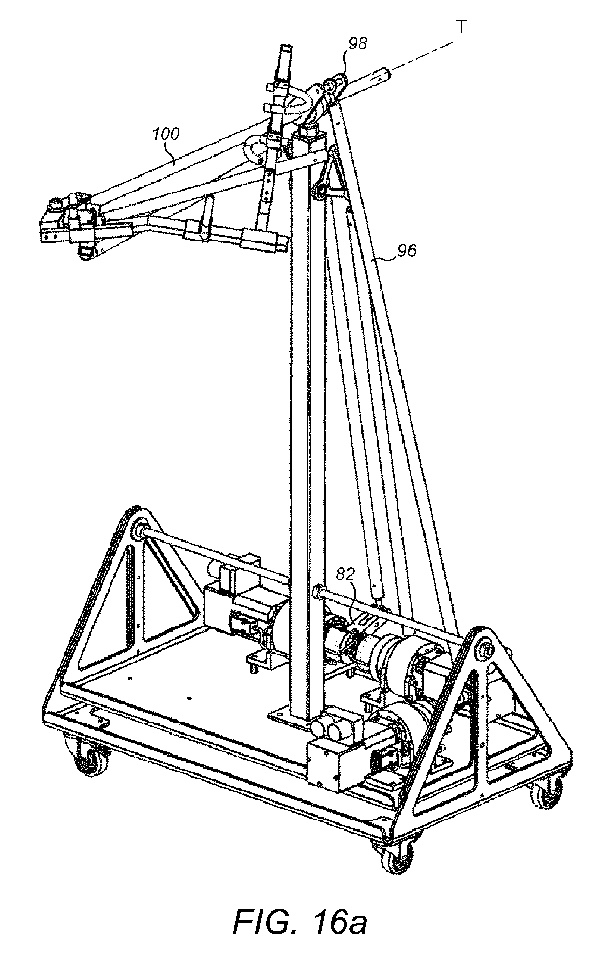

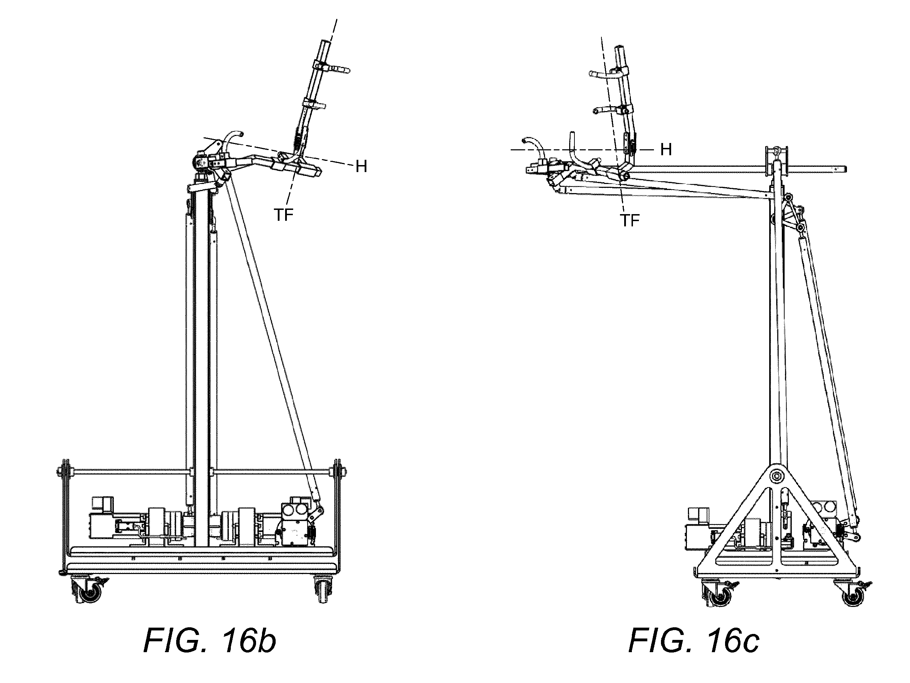

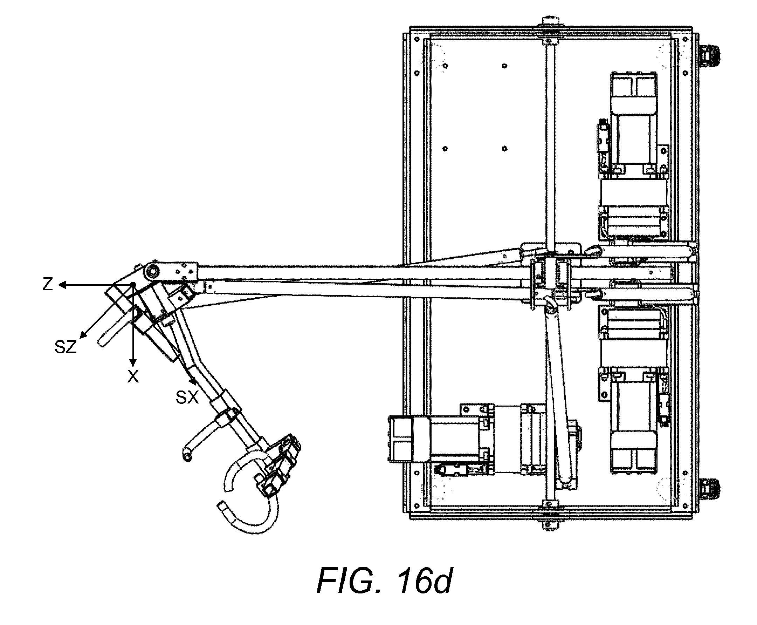

Figures 16a to 16d show the apparatus 10 when the subject's upper arm has moved to a horizontal position, and extending to the side of the subject from the shoulder (along SX, see humerus axis H in Figure 16b). The elbow is bent with the forearm pointing upward (see tibia-fibula axis TF Figure 16c). One motion is abduction, and as such it can be seen by a comparison of Figures 1 and 12a that the link 96 has moved axially upwardly to rotate the driven crank 98 to rotate the torque rod 100 and thereby rotate the human interface assembly 22 about the torque rod axis T. Another motion is external rotation of the upper arm, and the pushrods have moved in opposite directions to rotate the arm about the humerus axis. Comparing Figures 12a and 16a (internal rotation vs. external rotation), the driving cranks 70, 82 have moved in the opposite senses. The result is that in Figure 12a, the first pushrod 76 is pushed towards the shoulder, in Figure 16a it is pulled away from the shoulder. In Figure 12a, the second pushrod 76 is pulled away from the shoulder, in Figure 16a it is pushed towards the shoulder.

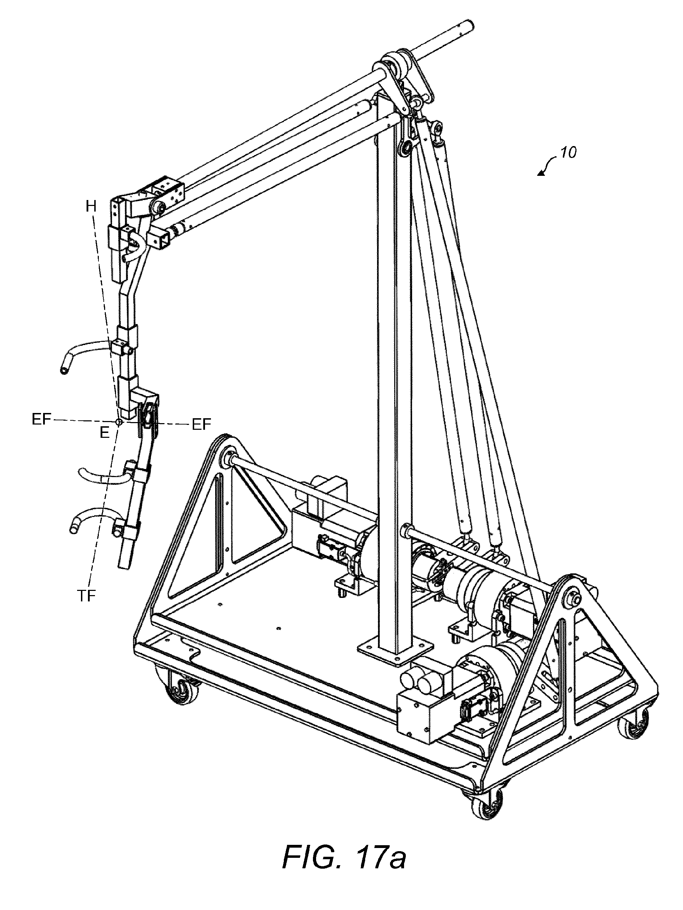

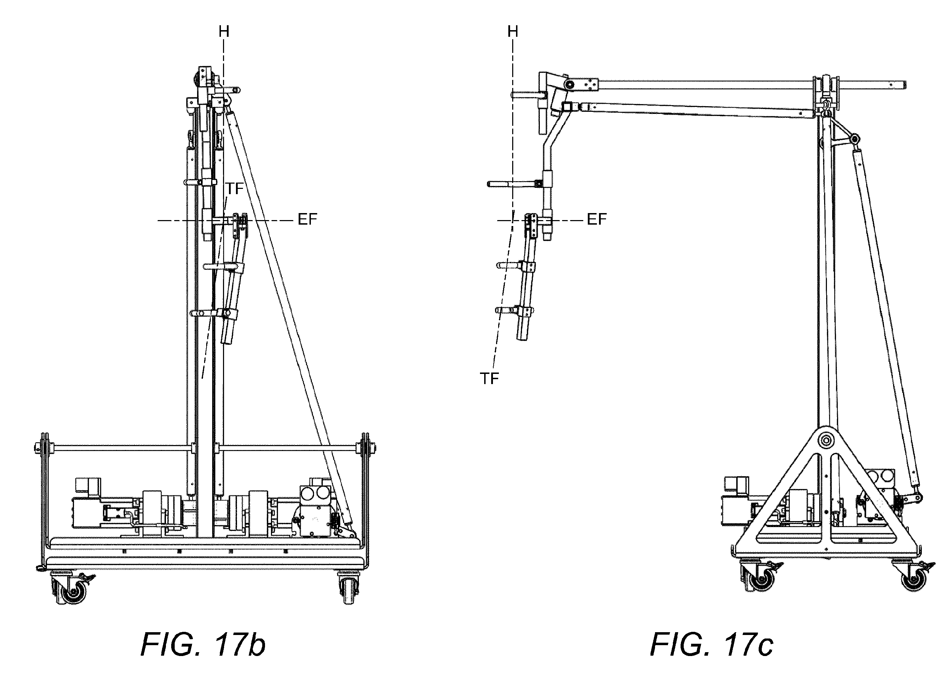

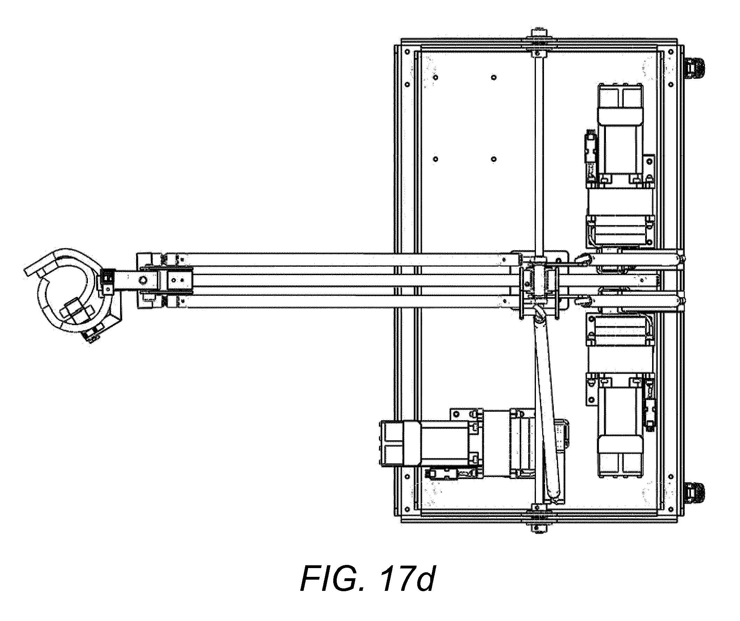

Figures 17a to 17d show the apparatus 10 when the subject's upper arm has not moved, and the lower arm has been extended about the elbow E. Only the elbow joint 148 is articulated about the elbow flexion axis EF.

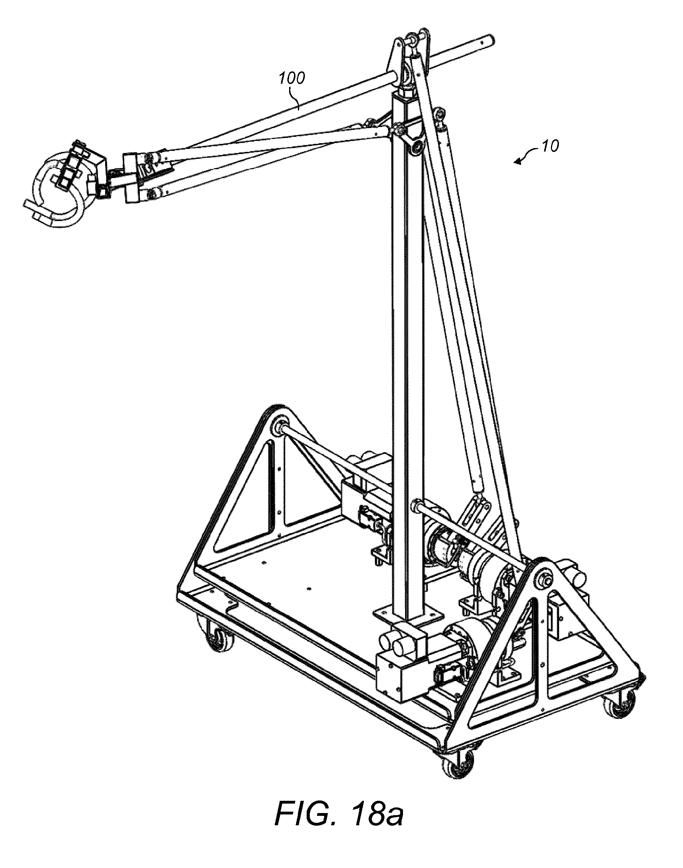

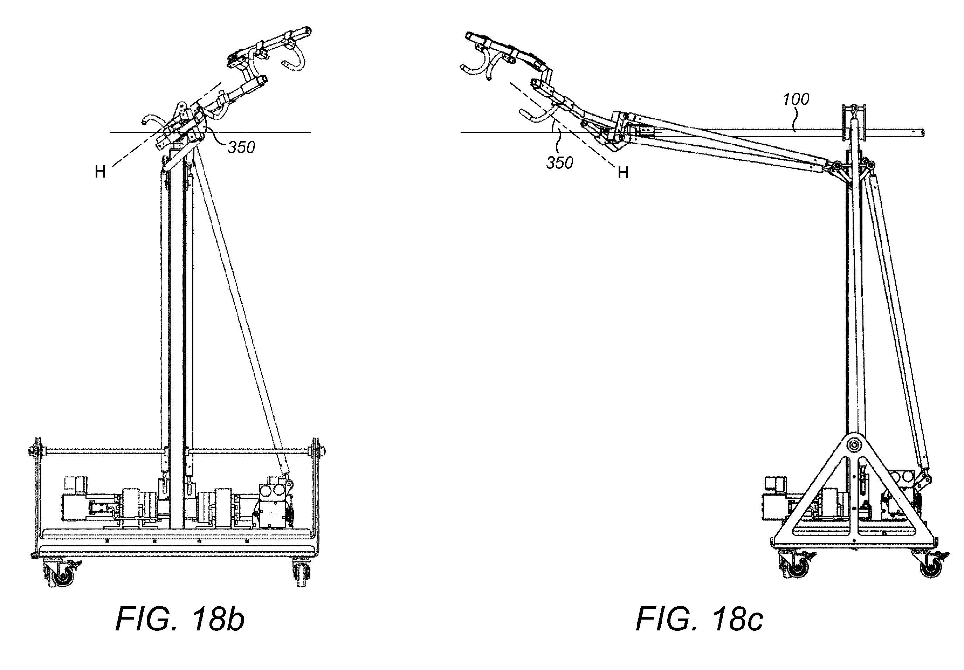

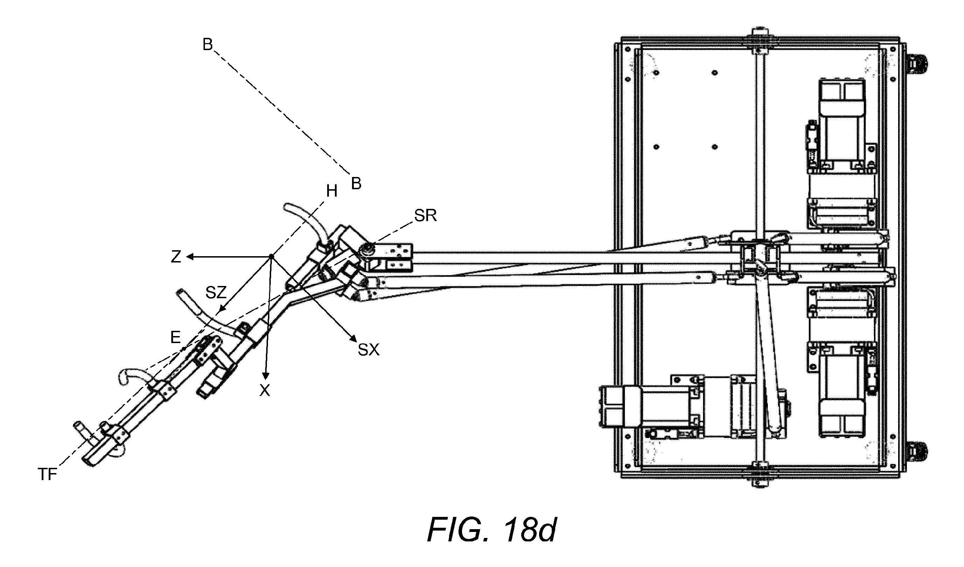

Figures 18a to 18d show a movement similar to Figures 15a to 15d, with the additional movement of the upper arm 35 degrees above the horizontal (i.e. additional abduction). As such, extra rotation of the torque rod 100 has taken place.

The above described apparatus is as a rehabilitation robot, and is therefore configured to support and assist the shoulder in its articulations. In order to do this, it utilises an admittance control system. The apparatus 10 comprises a plurality of force sensors located in the load paths of each of the force transfer subassemblies 16, 18, 20. Upon detecting a force input (from the patient attempting to move), the system reacts with a displacement- i.e. by powering the relevant motors to support the movement.

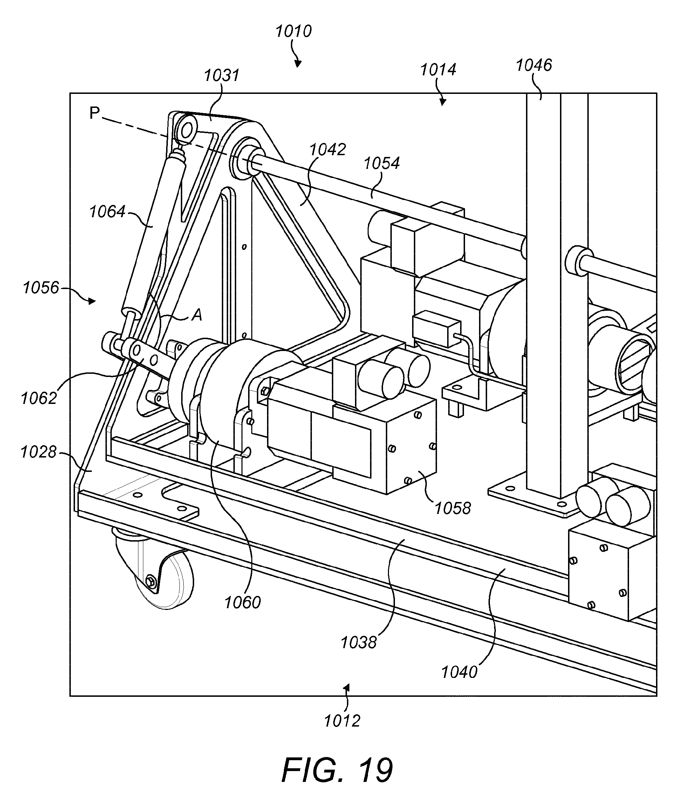

Figure 19 shows a second apparatus 1010 substantially identical to the apparatus 10, a base subassembly 1012 and a pendulum subassembly 1014. All other non-visible parts of the apparatus 1010 are identical to the apparatus 10.

The base of assembly 1012 comprises a frame 1024 comprising a generally flat, planar base 1026 having a generally triangular flange extending normal thereto at the end 1028. A lug 1031 is provided extending from the side of the flange 1028 proximate the apex.

The pendulum subassembly 1014 comprises a frame 1038 having a flat, planar base 1040. At the end of the base 1040, there are provided a projecting triangular flange 1042 in a similar manner to the frame 1024. At the geometric centre of the flat planar base 1040, an elongate pendulum arm 1046 extends normal thereto. The pendulum arm 1046 is a square cross-section tube which extends in the same direction as the flange 1042. The arm 1046 extends past the ends of both of the flanges 1028, 1042.

Unlike the assembly 10, the pendulum subassembly 1014 of the assembly 1010 further comprises a pendulum actuation subassembly 1056 which comprises a motor 1058, a gearbox 1060, the rotational output of which is connected to a driving crank 1062 which in turn connects to a link 1064. The gearbox 1060 and motor 1058 are mounted to the flat, planar base 1040 and the end of the link 1064 is connected to the lug 1031. In a normal resting position with the frame 1038 at bottom dead centre relative to the pivot shaft 1054, the crank 1062 and link 1064 are at an angle A to each other.

The pendulum subassembly 1014 can be rotated about the axis P by driving the motor 1058 which in turn changes the angle A between the crank 1062 and the link 1064 thereby swinging the pendulum arm 1046 and frame 1038 about the axis P.

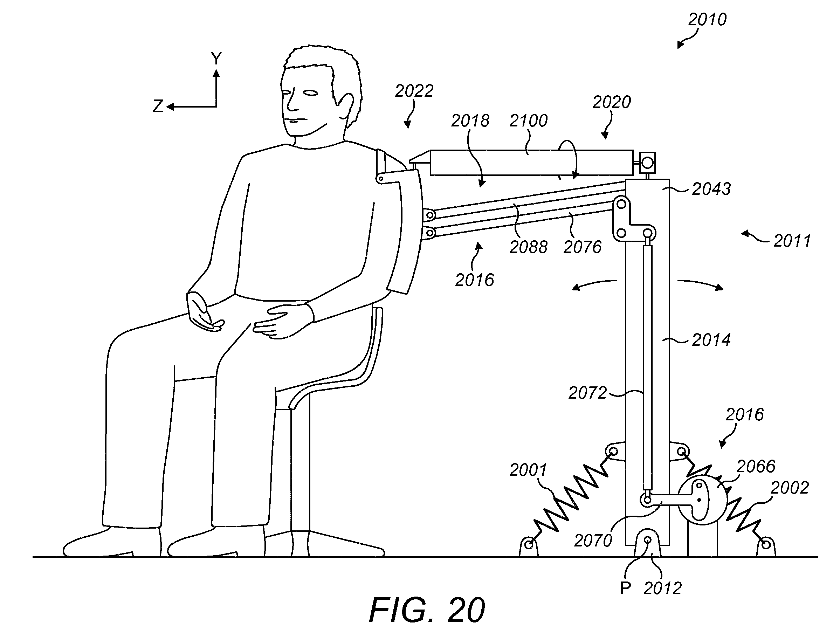

Figure 20 shows a third apparatus 2010. In the above embodiments, an inverted pendulum is provided to achieve the free linear motion of the shoulder in use (in apparatus direction Z). This pendulum does not need to be a pivoting table on which the motors are also located (as shown in Figures 1 to 19). Instead, as shown in Figure 20, the apparatus 2010 may be provided with a base 2011 having a base pivot 2012 and a movable carrier in the form of a pendulum 2014. The pendulum 2014 is rotatably mounted to a the base pivot 2012 about axis P and as such a free end 2048 of the pendulum 2014 can move in the Z direction. The pendulum 2014 is balanced by tension springs 2001, 2002 which act in opposite directions to provide a resilient force to restore the pendulum 2014 to the upright position (as shown in Fig. 20).

The apparatus 2010 comprises first, second and third force transfer assemblies 2016, 2018, 2020 comprising a first pushrod 2076, a second pushrod 2088 and a toruqe rod 2100 per the apparatus 10. The force transfer assemblies are connected to a human-machine interface 2022.

The motors and gearboxes which drive the force transfer assemblies do not swing with the pendulum in this case but are fixed. As shown in Figure 20, the motor 2066 drives a crank 2070 which drives a link 2072 which drives a 90 degree bell crank 2074 to drive the first pushrod 2076. Unlike the apparatus 10, the motor 2066 is not movable with the pendulum.

Variations fall within the scope of the present invention.

Instead of applying forces to the subject using the various motors provided in the above embodiments, the subject may transfer force via the pushrods to transducers to measure subject movement. This would be useful in a control / input scenario.

Control paradigms other than admittance control (e.g. impedance control) may be used.

## Claims

1. A movement apparatus (10) for a human limb, comprising:
a base (11);
a human-apparatus interface (22) configured to be attached to the limb;
a first force transfer subassembly (16, 18, 20) connected between the base (11) and the human-apparatus interface (22);
**characterised by**:
a second force transfer subassembly (16, 18, 20) connected between the base (11) and the human-apparatus interface (22), forming a separate load path to the first subassembly;
wherein the first and second force transfer subassemblies are independently moveable to transfer a force couple and thereby a torque between the base and the human-apparatus interface.

2. A movement apparatus (10) for a limb according to claim 1, in which the human-apparatus interface (22) is configured to be freely movable relative to the base in at least one linear degree of freedom.

3. A movement apparatus (10) for a limb according to claim 1 or 2, in which the first transfer subassembly comprises a first push rod (76) extending from the base to the human-apparatus interface (22).

4. A movement apparatus (10) for a limb according to claim 3, in which the second transfer subassembly comprises a second push rod (88) extending from the base to the human-apparatus interface (22), which second pushrod is attached to the human-apparatus interface (22) at a point offset from the first.

5. A movement apparatus (10) for a limb according to claim 4, in which the first and second force transfer subassemblies comprise an actuator for applying a push / pull force to the first and second pushrods.

6. A movement apparatus (10) for a limb according to claim 5, in which the actuators have a rotational output, and the push-pull force is exerted via cranks (70, 82) extending from the rotational outputs.

7. A movement apparatus (10) for a limb according to claim 6, in which the cranks (70, 82) are connected to links (72, 84) configured to drive the first and second pushrods (76, 88) via bell cranks (74, 86).

8. A movement apparatus (10) for a limb according to any of claims 5 to 7, comprising a control system for controlling the actuators, the control system configured to receive an input from a subject input human-apparatus, and to control the actuators to provide an assistive force in response to the input.

9. A movement apparatus (10) for a limb according to claim 8, comprising a force sensor in the load path of each force transfer subassembly.

10. A movement apparatus (10) for a limb according to claim 9, in which the control system utilises data from the force sensors to control the actuators using admittance control.

11. A movement apparatus (10) for a limb according to any of claims 4 to 10, in which the first and second push rods (76, 88) are each connected at either end by joints having three rotational degrees of freedom so as to allow linear motion of the human-apparatus interface (22) in degrees of freedom perpendicular to the push / pull direction of the pushrods (76, 88).

12. A movement apparatus (10) for a limb according to claim 11, in which the first and second pushrods (76, 88) are substantially parallel in at least one position of the human-apparatus interface so as to form a four bar linkage to allow linear motion of the human-apparatus interface (22) in degrees of freedom perpendicular to the push / pull direction of the pushrods (76, 88).

13. A movement apparatus (10) for a limb according to any preceding claim, in which the base comprises a carrier (14) movably mounted to a base subassembly (12), and in which at least part of the first and second force transfer subassemblies are mounted to the carrier (14) to permit movement thereof

14. A movement apparatus (10) for a limb according to claim 13, in which the carrier (14) is rotatably mounted in the base subassembly (12) for rotation about a carrier rotation axis (P).

15. A movement apparatus (10) for a limb according to claim 14, when dependent upon any of claims 3 to 12, in which the carrier rotation axis (P) is vertically offset from the push / pull direction of the first and second pushrods (76, 88) in use.
